# EUROPEAN PATENT SPECIFICATION

(11) **EP 0 317 468 B1**
(45) Date of publication and mention of the grant of the patent: **14.09.1994**
(21) Application number: 88480039.2
(22) Date of filing: 27.09.1988
(51) Int. Cl.: G06F 15/16, G06F 9/46

(54) **Bus flow control system**
Flusssteuerungssystem für Bus
Système de commande du flux pour bus

(30) Priority: 18.11.1987 US 122292
(43) Date of publication of application: 24.05.1989
(73) Proprietor: International Business Machines Corporation, Armonk, N.Y. 10504 (US)
(72) Inventor: Hammer, William Elder, N.E. Rochester Minnesota 55904 (US); Schwane, Walter Henry, Kasson Minnesota 55944 (US); Ziecina, Frederick Joseph, S.W. Rochester Minnesota 55902 (US)
(74) Representative: Vekemans, André

(56) References cited:
- US-A- 4 601 586
- US-A- 4 649 473
- SOFTWARE PRACTICE & EXPERIENCE. vol. 17, no. 10, October 1987, Chichester GB, pages 741-755; N. Gammage: "Remote rendevous"
- REVIEW OF THE ELECTRICAL COMMUNICATION LABORATOIES. vol. 33, no. 3, May 1985, Tokyo JP, pages 426-433; S. Nishikawa: "Communication management program development"
- The 7th International Conference on distributing systems, 21 September 1987, Berlin, West Germany, pages 113-118; D. Otway: "REX: a remote execution protocol for object-oriented distributed applications"

## Description

### Background of the Invention

The invention relates to control of work flow between processes on a bus, and in particular to the management of logical connections between processes for the sharing of processor resources.

In prior process to process communications, where the methods of communication are transparent to the communicating processes, one unit containing processes requests work to be performed by another unit on the bus. The data to be operated on is in the requestor's storage, and the server unit, that is, the unit that is executing the request, has access to the data. Prior systems lacked a means for fairly managing the logical connection between processes so that a minimum level of service would be available. The level of service is dependent on the system resources allocated.

From the point of view of programming processes, the resource that is shared is the work provided by the server process. The units of this resource are work requests. All users of any server must be guaranteed a minimum level of access to that resource, that is, must be allowed to have some number of outstanding work requests and be assured that these requests will be eventually presented to the server for processing.

Most bus implementations use individual signal lines to confirm the acceptance or rejection of messages indicating work requests. For telecommunications applications, a pacing mechanism has been implemented for flow control. SNA uses a counting mechanism. The initiator of messages is allowed a maximum number of messages to be outstanding until a confirmation is received. The number of messages that could be outstanding have to be established by the receiver of the messages, and the pacing control of messages outstanding would have to be the responsibility of the sender of messages. Thus each individual sender and receiver is directly involved in flow control.

In U.S. Patent No. 4,449,182 , a command ring and a response ring are stored in the host processor main storage. They contain space for commands to an I/O controller processor and space for responses to the commands from the controller. There is one response ring and one command ring for each I/O controller. An ownership bit is used to prevent one of the processors from writing over a command not yet processed by the I/O controller or a response not yet read by the host processor. If the command ring is full, or the response ring is empty, the host is told not to keep checking the rings until it receives an interrupt indicating that the command ring has become not full, or the response ring has become not empty. Both processors contain pointers indicating the next location in the rings it should read or write. Thus, in a very primitive fashion, a simple type of flow control between devices has been established.

The above patent does not address the problem of resource allocation for multiple processes communicating with each other. It does not guarantee a minimum level of service by multiple processes running in either processor. Communications in a multiprocess environment are much more complicated given different queueing delays and the independence of the processes.

### Summary of the Invention

The principal object of the invention is to provide a communication management system according to claim 1.

A communication management mechanism for a bus unit in a distributed processor network manages logical connections between communicating processes to ensure a minimum level of service is available by each process. A bus unit is a processing unit attached to the bus in a distributed processor network and might include one or more host processors or input/output processors for example. Logical connections between processes are grouped together in connection groups at each of the processors by a bus manager. Each connection group is given enough of the processor resources to perform at least one work request. When a connection group already has its limit of work requests pending, the bus manager informs bus units, which contain processes that requested work after the group was full, that their specific request cannot be performed at this time.

Because of hardware queueing delays, a requesting process may send a further work request intended for a process connected to the connection group which was full. The bus manager will again reject the request and inform the originator's bus unit. When work is finished by a process in the connection group, the bus manager will inform the bus unit that it can now accept further work requests. Since it is desirable to process work requests in the order that they were sent, the requesting bus unit will restart its work requests in the correct order, and then inform the bus unit of the server process that it should start accepting work requests again. The requesting bus unit will then send the requests which will be accepted by the server's bus unit only after receipt of the restart message from the requestor.

The use of connection groups provides significant advantages. It is a single flow control mechanism at the lowest programming level, and is used for all bus units. Independent of bus unit role, a Host processor, or I/O controller supporting different types of devices such as communications, secondary storage, work stations ... all use the flow control mechanism. It supports a peer to peer environment on the bus because it is the same for all bus units.

The connection groups prevent any bus unit from being cut off from the services of another bus unit due to heavy activity by other bus units. This is done by requiring at least one connection group for each processor attached to the bus and having that connection group be only for connections between processes on two unique processors. Thus, a processor coupled to two other processors must have at least two connection groups, one for each processor.

In one preferred embodiment, there are three types of connection groups for communications to each of the other processors with which communication is desired. Low activity processes belong to a connection group which can accept just a few work requests at any one time. Medium activity processes belong to a connection group which can accept more work requests, and high activity processes belong to a connection group which has many system resources to accept a high volume of work requests. The level of services is thus guaranteed to different processes based on the expected level of work.

The use of the above messages to indicate when a connection group is full and coordinate the resending of rejected messages in that connection group provides further benefits. It guarantees that work is performed in the order that it was intended.

Connection groups allow the assigning of a connection group to processes whose role is to free up resources in critical situations. Thus, if at least one work request can be received by this group, resources can be freed. One means of freeing resources is to shut down work totally and reset the system.

A further benefit of grouping resources is the ability to support more devices. Each device has a minimum amount of resources that are required for it to operate. By providing fewer resources in a connection group than (the minimum required per device times the number of devices in the group), more devices may be attached to a system. One example is a tape drive device. If it is desired to attach multiple tape drives, and each drive requires large amounts of storage to buffer data, the assignment of sufficient resources to each tape drive would leave little resource available to direct access storage devices. By combining the tape drives into one connection group, and allocating resources sufficient for only one or two to operate simultaneously, sufficient resources are available for direct access storage devices. A guaranteed level of support is provided for tape drive devices, and also for direct access storage devices. Since it is unlikely that five tape devices will be operating at the same time, there is no reduction in overall service.

### Brief Description of the Drawings

Fig. 1 is a block diagram overview of a multiprocess system having an interprocess communication facility for communication between processes taken from U.S. Patent No. 4,649,473.

Fig. 2 is a block diagram overview of the multiprocess system of Fig. 1 showing logical connection groups having logical connections between processes.

Fig. 3 shows a table and control block used in managing logical connections groups of Fig. 2.

Fig. 4 is a block flow diagram showing a requesting bus unit responding to a Queue Full status for work requests destined for a connection group which does not have sufficient resource to accept more work requests.

Fig. 5 is a further flow diagram of the requesting bus unit of Fig. 4 for responding to a Queue Full status.

Fig. 6 is a block diagram of queues used by the requesting bus unit of Fig. 4 for responding to a Queue Full status.

Fig. 7 is a block flow diagram of a server bus unit showing the flow involved in determining if there are sufficient resources available in a connection group, and sending a Queue Full message if there are not.

Fig. 8 is a further flow diagram of the server bus unit of Fig. 7 for determining when resources for a connection group have become available, and sending a Queue Space Available message.

Fig. 9 is a block diagram showing the fields of a Bus Error Condition message for reporting errors, and indicating a Queue Full status.

Fig. 10 is a block diagram showing the fields of a Queue Space Available message for indicating that resources are free for a connection group.

Fig. 11 is a block diagram showing the fields of a Restart Queue message for informing a connection group to start accepting work requests.

Fig. 12 is a diagram of the message flow involved in a queue full condition for a connection group.

Fig. 13 is a block diagram showing the fields of an Opstart message for indicating that there is a work request for an identified process.

Fig. 14 is a block diagram showing the fields of a Request/Response Control Block used to identify the location of requests and data.

Fig. 15 is a block diagram showing the fields of an addition to the Request/Response Control Block.

Fig. 16 is a block diagram showing the fields of an Opend message for indicating that there is a response to a work request.

### Detailed Description

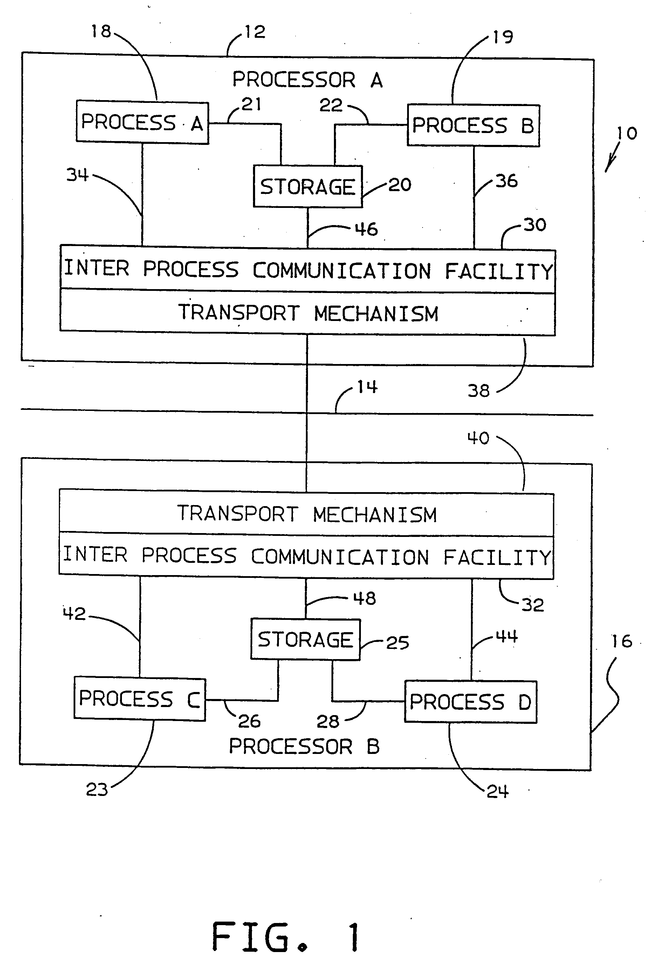

Fig. 1 is taken from US Patent No. 4,649,473 . It is used to provide the reader with a foundation for more clearly understanding the invention herein. The immediately following text describes Fig. 1, and concentrates on process to process communication wherein the processes are unaware of the underlying communication management. The underlying bus transport mechanism, and a bus manager which is the subject of this invention will be described in a later section.

In Fig. 1 a high level view of a distributed process environment is indicated generally at 10. A processor A indicated at 12 is coupled by a physical path indicated by a line 14 to a processor B indicated at 16. Processor A is indicated as having a process A indicated at 18 and a Process B indicated at 19 residing therein. A storage area 20 is associated with process A and process B as represented by lines 21 and 22 respectively to provide the process control of and access to data storage.

Processor B is indicated as having a process C indicated at 23 and a process D indicated at 24 residing therein. A storage area 25 is associated with process C and process D as represented by lines 26 and 28 respectively to provide the process control of and access to data storage.

Processes, or executing programs within the processors need to communicate with each other. In processors of differing configurations, or in the same processor as it changes over time, two processes that communicate may be in different relative locations and may have different physical paths between them.

An inter process communication facility (IPCF) is provided within processor A and processor B at 30 and 32 respectively to accommodate inter process communication which is location transparent to the communicating processes. IPCF 30 is coupled to process A in processor A as represented by a line 34 and to process B as represented by a line 36. Lines 34 and 36 represent interfaces between process A and process B to the IPCF 30. These interfaces permit communication between process A and process B provided appropriate data paths are established. IPCF 30 is also coupled through a transport mechanism 40 in processor B to IPCF 32. IPCF 32 is in turn coupled as represented by interface lines 42 and 44 to process C and process D. These interfaces with the IPCFs and the transport mechanisms permit establishment of communication between all the processes indicated, without process knowledge of the location of the process it is communicating with. The transport mechanisms 38 and 40 preferably comprise a plurality of transport mechanisms such as local transport mechanisms for use when process A and process B or process C and process D communicate within a single processor. If processor A and processor B reside in the same machine, a bus transport mechanism is used to facilitate communication between processes on processor A and processor B. For intermachine communication, a communication protocol such as SNA is suitable for use.

The transport mechanisms 38,40 are data movers. They are responsible for transferring bytes of data from one place to another and do not understand the meaning of the information being moved. Thus, storage 20 in processor A is coupled to the transport mechanism 38 as represented by a line 46 and storage 25 in processor B is coupled to transport mechanism 40 as represented by a line 48 to permit information transfers directly by the transport mechanisms 38,40.

The IPCF to the process attempting to communicate chooses the transport mechanism for the communication. The communicating processes need not be aware of the mechanism used. The process attempting to communicate supplies the name of the target process, as it is known to the process attempting to communicate, to the IPCF which uses an appropriate directory service to locate it. The IPCF then selects the appropriate transport mechanism and uses system-supplied services to set up the connection between the processes in a standard manner. IPCF can be used by all levels of processes, from applications to basic system services such as a paging manager.

To permit the use of many different transport mechanisms, each with different capabilities and characteristics, the IPCF includes a generic transport mechanism interface to each process. The interface defines a set of functions for the establishment of connections and for the passing of information between processes. The functions defined are mapped onto the transport mechanisms used by IPCF. Programs written to the interface are independent of the transport mechanism and therefore are independent of their relative locations when communicating.

Communication between processes is in terms of sending and receiving messages over a connection between them as established by IPCF. The messages contain work requests and/or data. Relative to a particular work request, a process assumes the role of a requestor or a server. The requestor initiates a work request by sending a request to a server that carries it out. Requests contain a work request (a command and its parameters) and optionally some data. Both the request and the data are of variable length.

If the reader desires further information on IPCF, and the manner in which connections are established, the above mentioned patent provides further detail. A bus manager, which is part of transport mechanism 38 and 40 is now described.

### BUS MANAGER

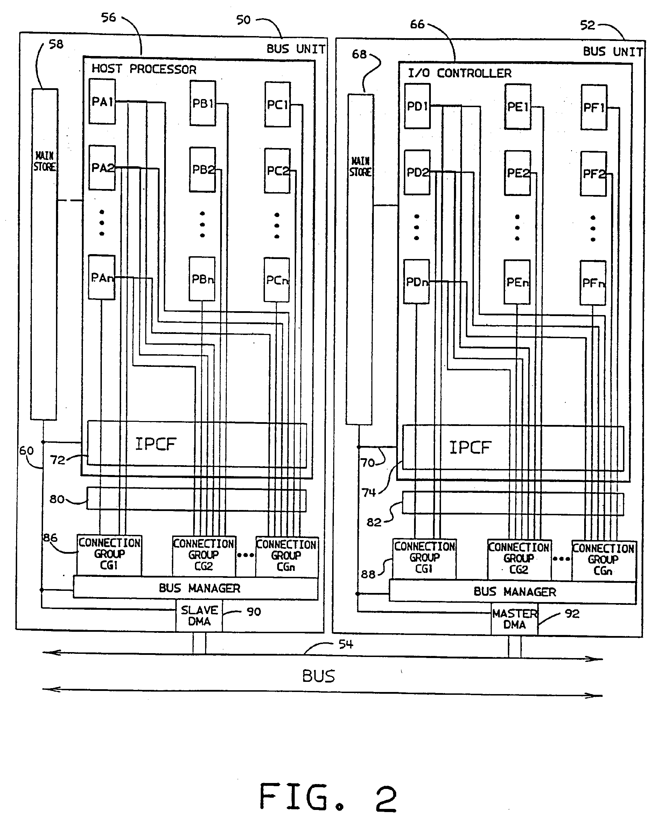

In Fig. 2, two bus units, 50 and 52 are coupled by a physical path such as an I/O (input and output) bus 54. In one preferred embodiment, bus unit 50 comprises a host processing system with a processor 56 having a main storage 58 coupled thereto by a line 60. Host processor 56 executes a plurality of programs, from accounting programs to operating system programs. An executing instance of a program is referred to as a process. Several processes PA1-PAn, PB1-PBn and PC1-PCn are shown in host processor 56.

Bus unit 52, in one preferred embodiment comprises an I/O processor 66 having a main storage 68 coupled by a line 70. I/O processor 66 also has a number of processes PD1-PDn, PE1-PEn and PF1-PFn which may be executing. While a large number of processes are shown in each of the processors 56 and 66, there may be situations where a processor will have only one process. In further embodiments, processor 66 is a peer processor in a network of processors. Processes communicate with each other, regardless of the locations of two communicating processes through IPCF 72 in bus unit 50 and IPCF 74 in bus unit 52. Each pair of communicating processes is logically connected through IPCF by logical connections indicated by lines 80 in bus unit 50 and 82 in bus unit 52.

The establishment of connections is described in further detail in the above incorporated patent. In essence, an IPCF Open verb establishes an IPCF connection between two processes. The connection is unique for each pair of processes communicating. Thus, each of lines 80 match to one of lines 82. Since there may be more I/O processors or host processors than shown in Fig. 2, more lines 80 than lines 82 signify connections to processes in processors not shown. The Open verb, when issued by a process desiring to start a communication causes IPCF to create a logical connection between the process that issued the Open verb and the target process identified by the Open verb. The target of the Open verb is identified through an entity name. The Open verb establishes the connection to a new or already executing instance of a program based on the entity name supplied on the Open verb.

The Open verb comprises an entity name used by IPCF and the associated operating systems to determine the program in the server and executing instance of that program (i.e. process) to which the connection is to be made. A connection id identifies the connection that is returned by IPCF. It is used to refer to this connection on subsequent operations. A particular connection id is only known within a single processor. Two connected processes will in general have different connection ids for the same connection. Connection ids are assigned by the local IPCF and are unique within a processor. A return code is used by IPCF to indicate to the process completion of the Open verb.

A bus manager 86 is shown coupled to the host process 56 by a number of logical connections 80 already established. A similar bus manager 88 is shown in bus unit 52, also with multiple connections at 82. The bus manager 86 provides the same functions performed by the bus transport mechanisms (BTMs), indicated at 38 and 40 in the bus units of Fig. 1.

The bus managers 86 and 88 manage the connections, and issue messages to control the flow of work requests on the bus 54. Hardware supporting the bus indicated at 90 and 92 provide arbitration to the bus for each of the bus units, DMA capability to another bus unit's main storage, and a queueing of messages from the respective bus managers until control of the bus has been obtained to permit transmission of messages and data. The bus hardware also controls queueing of messages from the bus units in main storage queues.

The bus manager 86 receives a communication caused by an open verb being issued in bus unit 52. It then establishes a connection to the indicated process. Using information such as the identity of the target process (ie: the server process), the requesting process identity, the type of work a particular device performs, or other factors, the connection id for that connection is assigned to one of a plurality of connection groups labeled CG1, CG2,... CGn. Some of the information is contained in the communication with bus unit 52. Other information is contained in main storage 58 and is accessed based on the information supplied by bus unit 52. The assignment is then based on that information, and preconfigured by developers in one preferred embodiment.

Connection groups are used to control the flow of work requests. Each work request requires system resources to process. If all work requests were served on a first come first serve basis, a number of high resource requiring devices would keep other devices from being able to be served.

One example of a device which requires a large amount of main storage resource is a tape drive device. In order to keep a tape device operating in streaming mode, its most efficient mode of operation, a large main storage buffer is required. If it is desired to attach multiple tape drives, and each requires large amounts of storage to buffer data when it is operating in a streaming mode, the assignment of sufficient resources to each tape drive would leave few resources available to be allocated to direct access storage devices. By combining the tape drives into one connection group, and allocating resources sufficient for only one or two to operate simultaneously, many more resources are available for direct access storage devices. A guaranteed level of support is provided for tape drive devices, and also for direct access storage devices. Since it is unlikely that five tape devices will be operating at the same time, there is no reduction in overall service.

Connection groups can also be used to ensure that resources will always be available for serving certain host processes. One example might be the placing of the server side connection between a host save/restore process and a corresponding I/O process into a connection group where that is the sole connection in that group. Thus, while the server process may have connections to other groups, resources will always be available for serving the host save/restore work request.

One basis for assigning groups are the operating characteristic of devices. Heavy data movers, such as tape drives, which also are only occasionally used, are put into one group. Devices such as direct access storage devices, which are heavily used in paging data into and out of main storage are put into another group, and a large amount of resources are allocated to the group to assure a high level of service. Other devices, such as work stations are put into yet another group. If there are sufficient resources available, each device has its own group.

When discussing devices being put into groups, it is a shorthand notation for stating that the connections to processes associated with the device are put into one group. Further assignment of connections into groups are made on the basis of the types of work requests that are being served. Connections relating to error condition handling and other maintenance related work requests may be put into yet another group by itself to guarantee a minimum level of service to such requests. It is seen that great flexibility is provided by the use of connection groups to allocate resources, and thus control the flow of work.

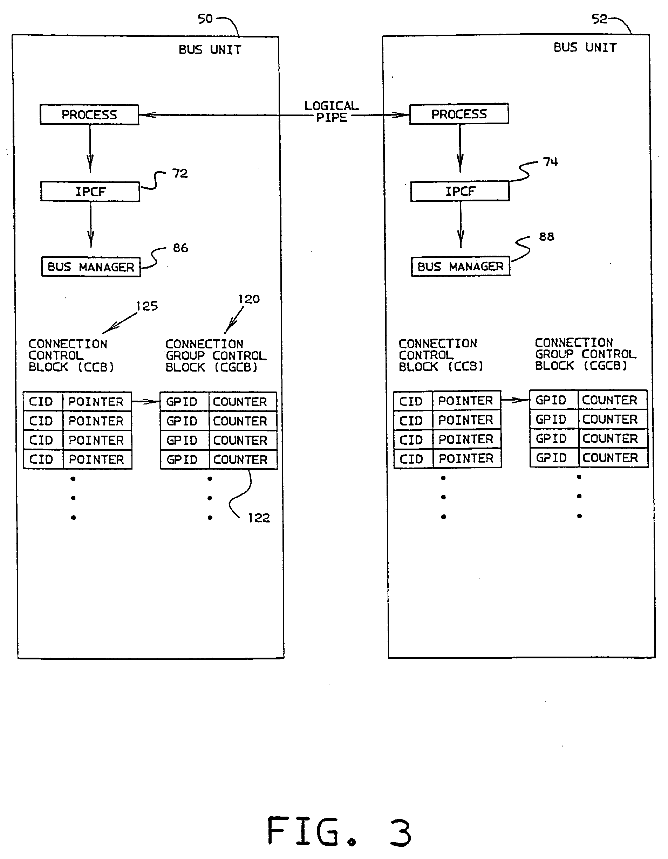

In bus unit 50, when acting as a server, each connection group is listed in a control block 120 in Fig. 3 (the numbering is consistent with Fig. 2) in main storage 58. Control block 120 contains an entry for each connection group CG1-n labeled GP10 for Group 10. A count indicated in column 122 is associated with GPID entry which is used to keep track of the number of work requests received via a connection in the group, but which have not yet been served by a process in the bus unit 50. A table of active connection ids (C10) 125 have pointers to connection group entries at 120, and identify the group that a connection is a part of. Bus unit 52 has a similar mechanism for keeping track of the number of outstanding unserved work requests.

One of the benefits of the above flow of work requests is that work (for a single connection with the same priority) in a connection group is ultimately served in the order that it was requested by the requesting bus unit. Thus if multiple, some priority requests to a process were generated to write data, it will be written in the order requested even if there was a time when resources were not available. All of this occurs transparent to the requesting process.

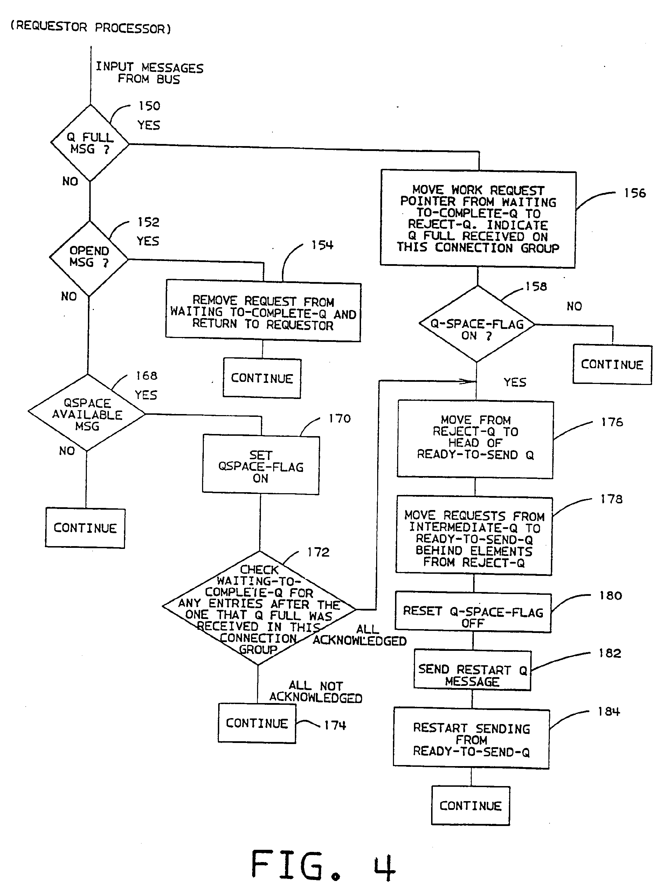

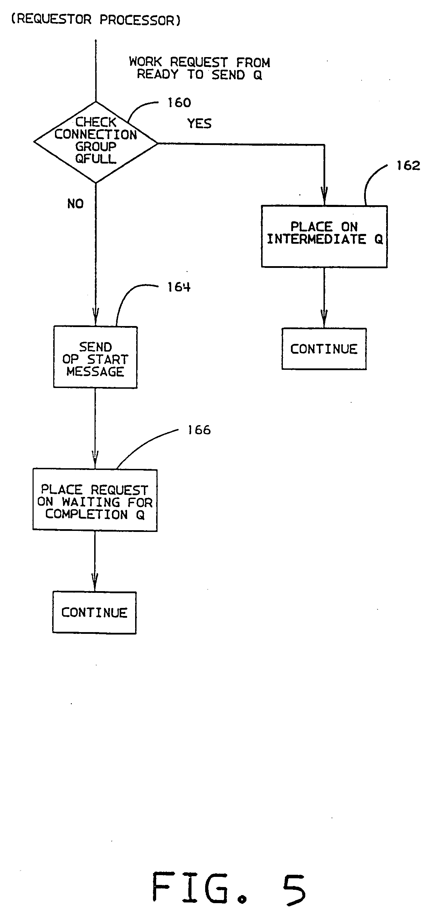

A flow diagram in a requestor bus unit is now described with reference to Fig. 4 and Fig. 5. Four queues are used to keep track of work requests which originated in the requestor bus unit. Each queue contains a pointer to the work request, a request id, and the corresponding connection group in the server bus unit which is communicated during the OPEN process. A ready-to-send-queue is used in the normal flow of work requests to point to queue work requests that are ready to be sent to server processors. When an OP START message is sent for a request in the ready-to-send-queue, the pointer is removed and placed on a waiting-for-response-queue. When an OP END message is received, the entry for the work request is removed from all queues. This normal flow is indicated by blocks 150, 152 and 154 in Fig. 4.

When a QUEUE FULL indication is returned in response to a work request, the pointer is moved from the waiting to complete queue to a reject queue at 156, and an indication that a QUEUE FULL message was received is associated with the connection group for which it was received. A Q SPACE FLAG for indicating that the connection group now has space available is then checked at 158. This flag is normally off, so the bus manager continues to send and receive communications. Each work request on the waiting to complete queue for which a QUEUE FULL indication is returned is placed on the reject queue in this manner.

In Fig. 5, when a bus manager is ready to send another OP START corresponding to the next entry in the ready to send Q, it checks for a connection group full indication for the connection group in the server bus unit at 160. If it indicates that the connection group queue is full, the entry for the request is placed on an intermediate-queue at 162. If it is not full, an OPSTART message is sent at 164, and the request entry is placed on the waiting for completion queue at 166.

Back in the flow of Fig. 4, when a Queue Space Available message is received by the requestor processor at 168, the Q SPACE FLAG is set on at 170, and the waiting to complete queue is checked for any entries after the one that QUEUE FULL was received for in the identified connection group. If queue full has not been returned for all requests waiting to complete, the bus unit continues to wait for the next communication at 174.

If all are acknowledged at 172, the entries are moved from the reject-queue to the beginning of the ready to send queue at 176. Then, request entries are moved from the intermediate queue to the ready-to-send-queue behind elements from the reject queue at 178, and the Q SPACE FLAG is reset at 180. A Restart Queue message is sent at 182, and the bus manager begins sending from the ready to send queue at 184.

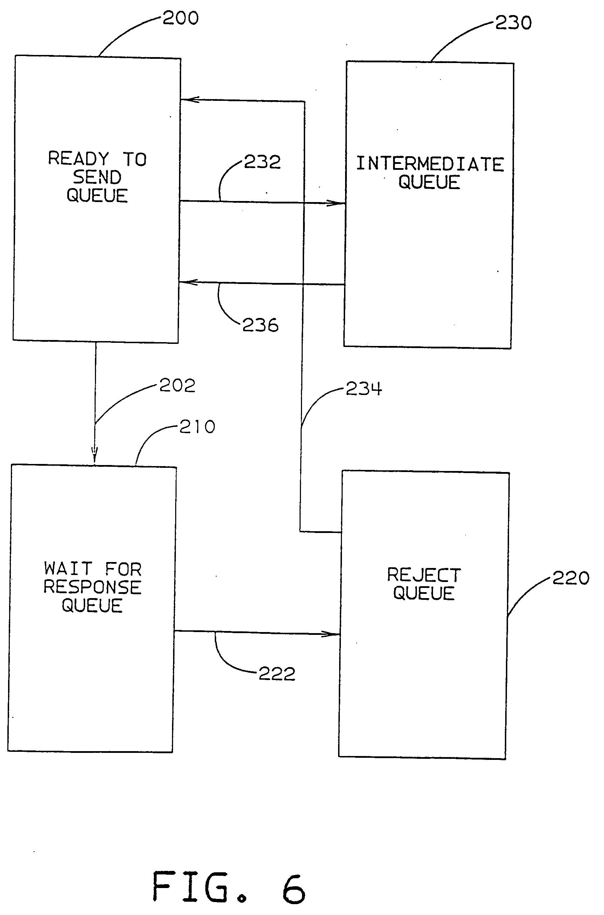

In Fig. 6, the queues used by the above flow are shown, with the flow of queue entries corresponding to work requests shown by arrows. The ready to send queue 200 normally transfers entries by line 202 to the wait for response queue 210. If a QUEUE FULL status is received, entries are transferred from queue 210 to the reject queue 220 via a line 222. Meanwhile, as new work in queue 200 is being initiated, if a work request to a connection group already full is detected, it is transferred to the intermediate queue 230 via line 232. When all entries from the wait for response queue 210 which are intended for the full connection group have been transferred to the reject queue 220, and the Restart Queue message has been sent in response to a Queue Space Available message, the rejected requests are sent back to the top of the ready to send queue 200 via a line 234. Then, on line 236, other requests intended for the group which now has resources available for further work are transferred to the ready to send queue 200 behind the previously rejected requests.

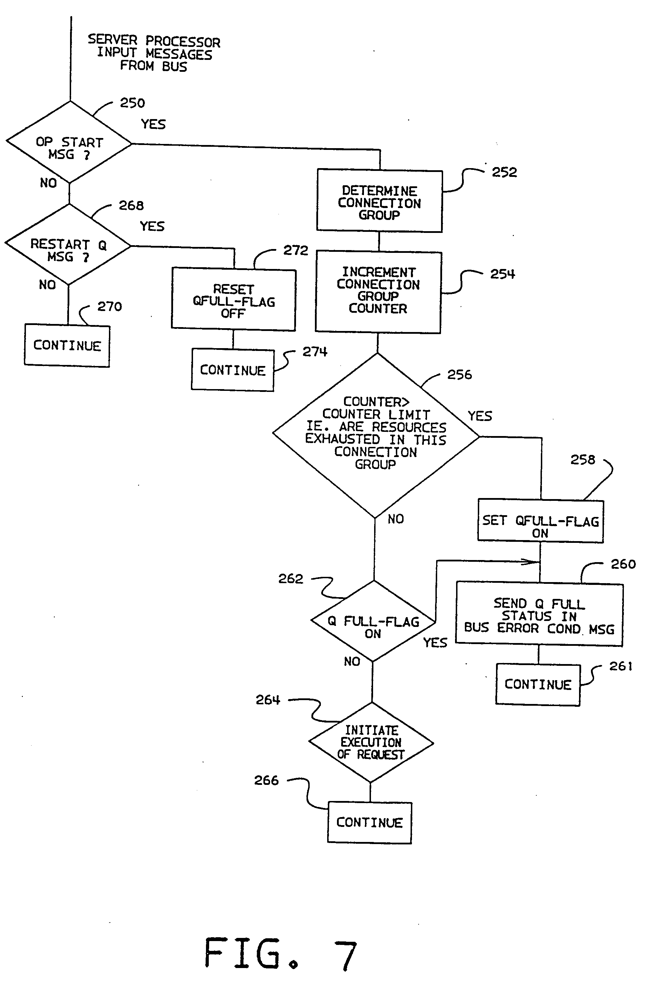

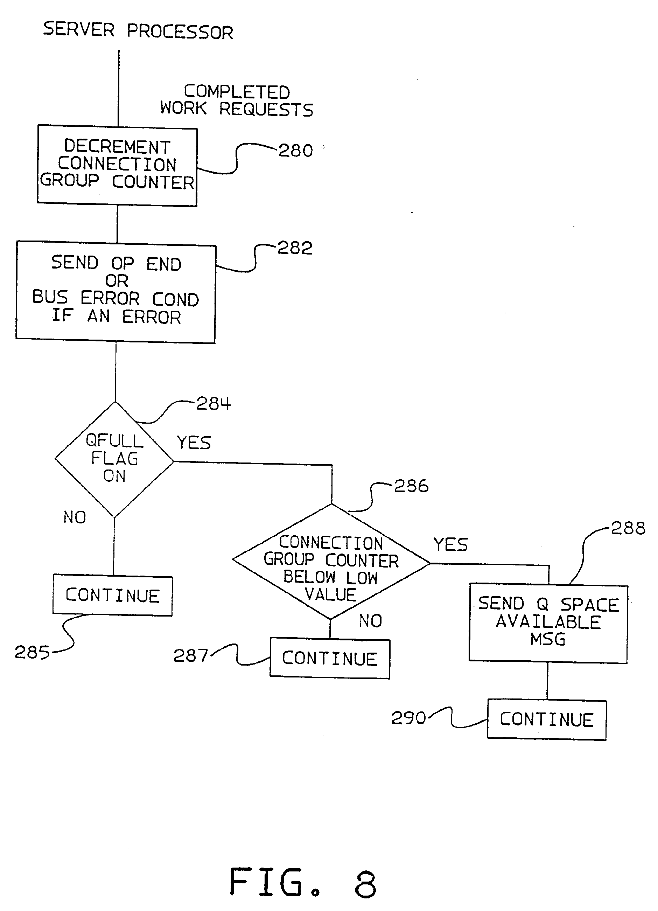

Corresponding flow in the server bus unit is shown in Fig. 7 and 8. On receipt of an OPSTART message at 250 by a server bus unit, the connection group is determined at 252, and its counter is incremented at 254. A counter limit is used to define the number of work requests which a connection group may have outstanding at any one time. The value of the counter is compared to the counter limit at 256, and if the value is greater than the limit, a Q FULL FLAG is set at 258 and QUEUE FULL status is sent in a Bus Error Condition Message to the originating bus unit at 260, and processing continues at 261. In a further embodiment, actual resources available are monitored and compared to the resources required for a work request indicated by the OPSTART. If the counter is not greater than the limit, but the Q FULL FLAG is detected as on at 262, the flow returns to 260 and the QUEUE FULL status is sent in response to the OPSTART, otherwise, processing of the request continues at 264, and flow continues at 266. If the message received at 250 is not an OPSTART message, it is checked to see if it is a Restart Queue message at 268. If not, processing continues at 270. If it is a Restart Queue message, the Q FULL FLAG is reset to off at 272, and processing continues at 274.

To clear up a queue full condition, the server processor must either allocate more resources, and increase the limit of outstanding requests, or complete work on at least one of the requests on a full connection. This flow is indicated in Fig. 8. When a work request is completed, the relevant connection group counter is decremented at 280. Either an OPEND, or a Bus Error Condition message is sent at 282. The Q FULL FLAG is then checked at 284, and if it is off, processing continues at 285. If the Q FULL FLAG was set on, the connection group counter is checked to see if it is below the limit at 286. This limit, referred to as a "low value" in block 286 need not be the same as the previously discussed limit. It may be desirable to establish an even lower limit to ensure that sufficient resources will be available for a number of requests. This may help to eliminate a constant sequence of QUEUE FULL flows where multiple requests may be sent quickly following restart of the requestors queue. If the counter is not below the low value, processing continues at 287. If the counter is below the low value at 286, a Queue Space Available message is sent at 288, and processing continues at 290.

In one preferred embodiment, separate connection groups are defined in bus unit 50 for each communication protocol including connections to processes performing X.25, LAN, SDLC and other communication protocols.

Another group includes error handling process connections. Yet another group is for general maintenance process related connections.

A further group includes normal functions such as connections to processes involved in transferring data between a disk drive device controlled by bus unit 52.

Several variations in the number of connection groups is within the scope of the invention. Some processes may require a large volume of resource, so it may be desirable to have a single connection group for connections to each such process. The particular grouping of connections desired is dependent on the actual implementation, and the characteristics of the processes which are to communicate with each other.

The establishment of a connection between a process in host processor 56 and a process in I/O processor also 66 results in bus manager 88 completing the connection and assigning its processes connection to one of multiple connection groups CG1, CG2 .... CGn. Thus, for each process in the system comprising the bus units, that has a connection to another process, the bus manager of the processor where the target process is located assigns it connection to a group, and allocates resources to the connection group to be used to serve work requests on the connection assigned to that group.

### FLOW CONTROL BUS MESSAGES

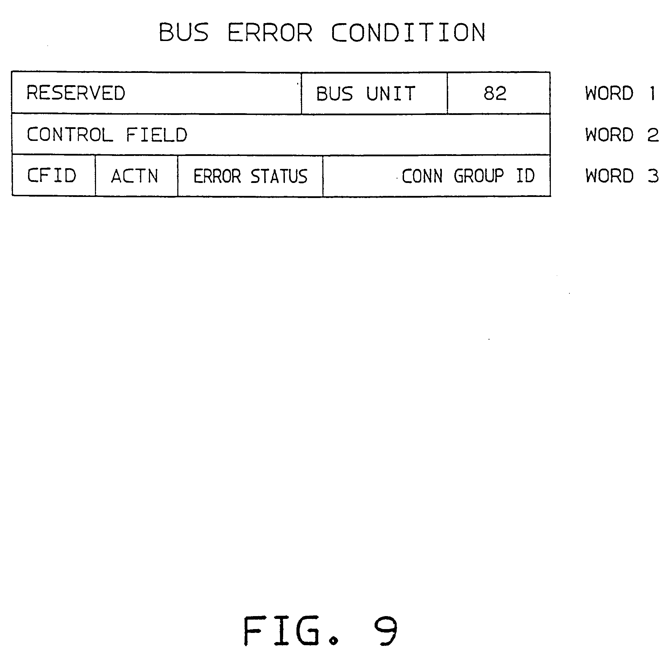

Messages are transferred between bus managers to control and re-synchronize messages when a connection group does not have sufficient resources to service a request intended for a process connected to that group. When a target bus unit cannot accept additional work for a particular connection group, it returns a message with QUEUE FULL status specified. This status is contained within a Bus Error Condition message, whose format is shown in Fig. 9. The Bus Error Condition message is returned in place of a normal response to a request to report failures that prevent the successful completion or continuation of operations. Some other conditions for which the Bus Error Condition message is sent include, addressing errors on memory access requests, format errors, and receipt of undefined or unsupported messages. Several other conditions may call for the sending of this message dependent on the physical implementation of the bus transport mechanism.

A field labeled RESERVED in the Bus Error Condition message is reserved for future use. A BUS UNIT field is used to identify the source of the message. It is ignored for purposes of this invention. A third field, MESSAGE ID (82), is used to identify the message as a Bus Error Condition message. A CONTROL FIELD contains information to identify the unique request or connection experiencing a failure. The contents of this field depend on the failure and the particular transport message/DMA and flow method experiencing the failure. A CFID field identifies the content of the CONTROL FIELD. Different values indicate that the information in the control field is a requestor ID, or a server connection ID, or the address of a control block, etc. It is dependent on the reason the message was sent, and who sent it. An ACTN field identifies a recovery action to be taken. One value indicates that no action is to be taken, another requires initiation of closing a connection, another causes a reset to re-synchronize communications.

The QUEUE FULL condition is indicated in the ERROR STATUS field, which is followed by a CONN GROUP ID which identifies the connection group which was full. It indicates that the message was not executed by the addressed bus unit. The CONTROL FIELD will contain different values when the QUEUE FULL status is indicated. It may contain a control block address, or a requestor's ID dependent on the manner in which data was to be transferred. Different manners of transferring data will be described further in a flow control section of the present application. The ERROR STATUS field is also used to identify the status of other error conditions, such as those described above.

After sending a QUEUE FULL status to a source bus unit, the bus manager of the target bus unit which sent it monitors the appropriate connection group to determine when sufficient resources are available to serve the connection group.

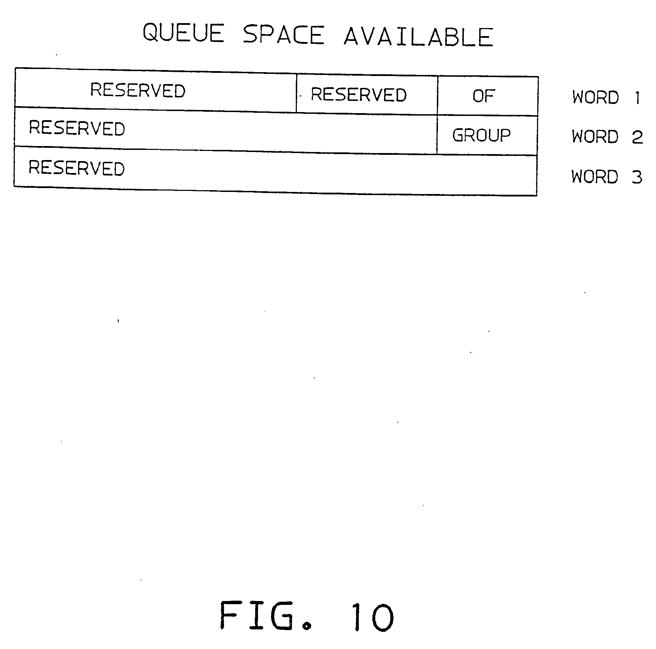

When the target bus unit has space available in that particular connection group, it sends a Queue Space Available message to the source bus unit. The Queue Space Available bus unit message is used to indicate to the source bus manager that queue space is available. It is sent by a bus unit only after the bus unit has sent a QUEUE FULL status to the source bus unit. It indicates what connection group has queue space available. The format of the Queue Space Available message is shown in Fig. 10. There are four RESERVED fields, a MESSAGE ID field, and a GROUP field which uniquely defines the connection group for which there is queue space available.

The source bus unit will receive the Queue Space Available message and will determine the number of work requests which were sent to that particular connection group on the target bus unit. Since communication occur asynchronously, and there may be internal queue delays in the hardware of the source bus unit, the source bus unit may have already sent more messages to initiate work.

When the communications which should be sent again are identified, ie: those that occurred later in time than the message which caused the QUEUE FULL status to be returned, and were destined for the connection group that was full, the bus manager of the source bus unit issues a Restart Queue message. This message is used to ensure that no messages are taken out of order by the connection group in the target processor. If the connection group were to start taking messages immediately after issuance of a Queue Space Available message, it is likely that some work would be processed out of order. This would be work initiated by messages issued by the source bus unit prior to the source bus unit receiving the QUEUE FULL status, and which was received by the target bus unit manager after issuance of the Queue Space Available message.

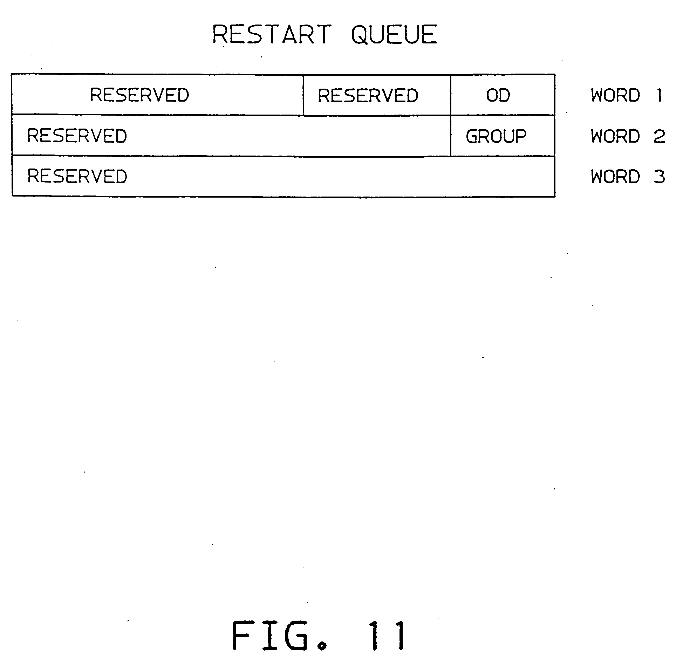

The format of the Restart Queue message is indicated in Fig. 11. It is similar to the Queue Space Available message in that it identifies what type of message it is in the MESSAGE (0/D)ID field, and identifies the connection group to restart its queue in a GROUP field. Until the Restart Queue message is received by the bus manager of the target bus unit, the bus manager returns the QUEUE FULL status for each message to start work.

### MESSAGE FLOW EXAMPLES

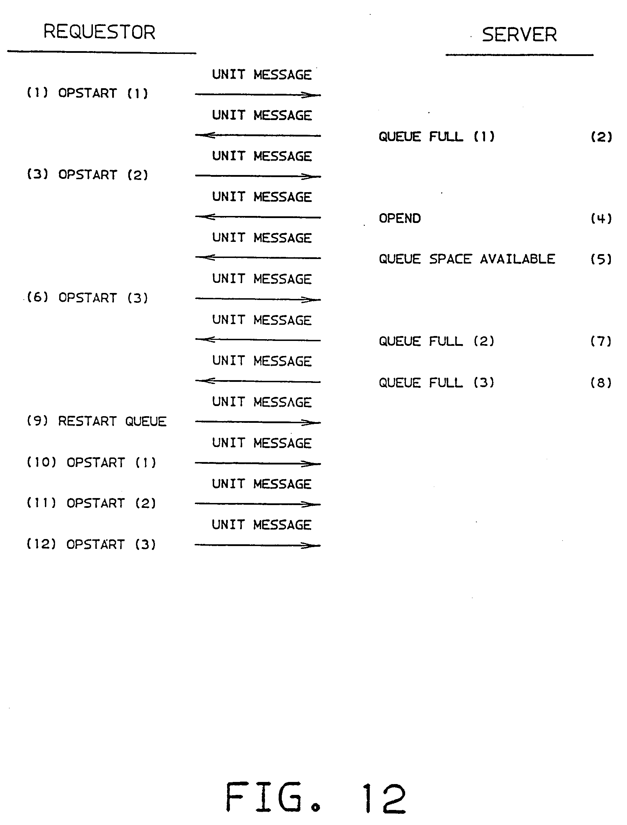

In Fig. 12 an interchange of messages in response to a full queue for a connection group in a target bus unit is shown.

The target bus unit is labeled as the server, and the source bus unit is labeled as the requestor. Messages sent and received by the server are shown on the server side of the Figure because that is where the flow is controlled. Arrows between the requestor and server point to the bus unit which received each message. The sequence of messages is indicated in numerical order. The events are now listed, in the order they appear in Fig. 12:
1. The requestor processor sends a message that initiates work, which is called an OPSTART(1) message, (defined later in this description) to the server processor.
2. The server processor has recognized a QUEUE FULL condition for the connection group that the OPSTART message was intended for, and returns an error message with QUEUE FULL status.
3. Because of the asynchronous nature of the bus units, the requestor is not yet aware of the QUEUE FULL status, and it sends a second message, OPSTART(2) to the server.
4. The server will have completed some previous work request, and will signal that to the requestor by sending an OPEND message.
5. Since the server has completed some previous work request, the server will have resources available or queue space available, and will send a Queue Space Available message to the requestor.
6. The requestor has not recognized the Queue Full condition because of hardware queueing delays in the requestor, and will send an OPSTART(3) message.
7. The server must continue to return QUEUE FULL status to the requestor until the server receives a Restart Queue message. It therefore returns a QUEUE FULL(2) status in response to recognizing the OPSTART(2) message.
8. The server now recognizes the OPSTART(3) message and returns a QUEUE FULL(3) message.
9. The requestor now recognizes the QUEUE FULL status for OPSTART (1), (2) and (3), and Queue Space Available message and sends a Restart Queue message after determining which messages it must resend, and the order in which to send them.
10, 11, and 12. The requestor processor resends the OPSTART messages in the correct order.

When work is completed by a server, an OPEND message is sent to the requesting bus unit to indicate that work has completed. Its format is described later.

### DATA FLOW

In the preferred embodiment of Fig. 2, the bus hardware 90 and 92 of bus units 50 and 52 are labeled as having direct memory access (DMA) capability. This capability is a standard hardware capability that exists on most hardware today. Master DMA capability allows the bus unit which has it to directly access the main storage of a bus unit with slave DMA capability without interrupting the processor in the slave DMA bus unit.

Hence, the details of its operation will not be described, as they are not necessary for a full understanding of the invention.

Bus unit 50 has a slave DMA capability 90. In the preferred embodiment, bus unit 50 is a host processor. Slave DMA capability permits a bus unit to let other bus units access its main store 58 without interrupting the host processor 56. Thus, line 60, which gives host processor 56 access to main store 58 is also connected to bus manager 86, and to slave DMA hardware to permit 90 access directly to main store 58. This in turn permits another bus unit, such as bus unit 52 which has master DMA hardware 92 capability to access main store 58 of bus unit 50 without interrupting host processor 56. A bus unit with only slave DMA capability cannot directly access the main store of any other bus unit, while a unit with only master DMA capability cannot enable any other bus unit trying to directly access its main store.

If a process in bus unit 52 sends a work request to a process in bus unit 50, the actual data transfers must be made transparent to the processes. IPCF 72 and 74 is the verb interface used by the processes to handle work. A server process will access data identified by the requestor at its own pace. Since the server bus unit in this case only has slave DMA capability, a means for obtaining the data transparent to both IPCF and the processes is provided.

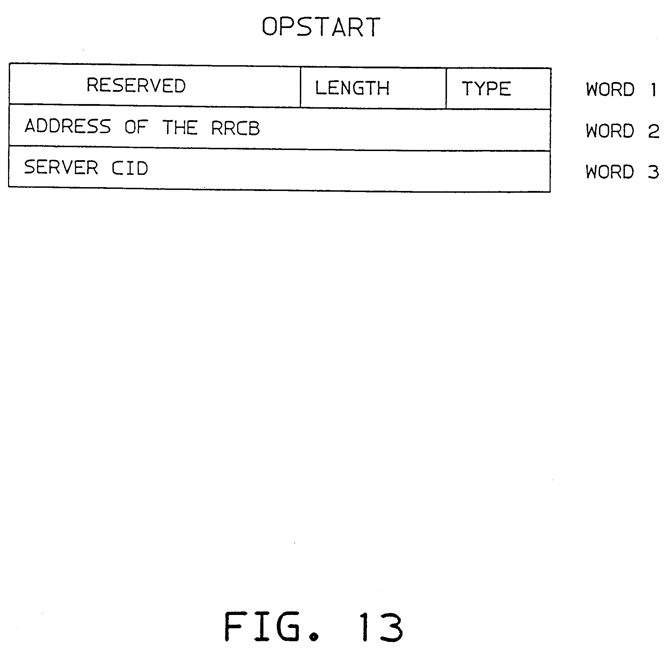

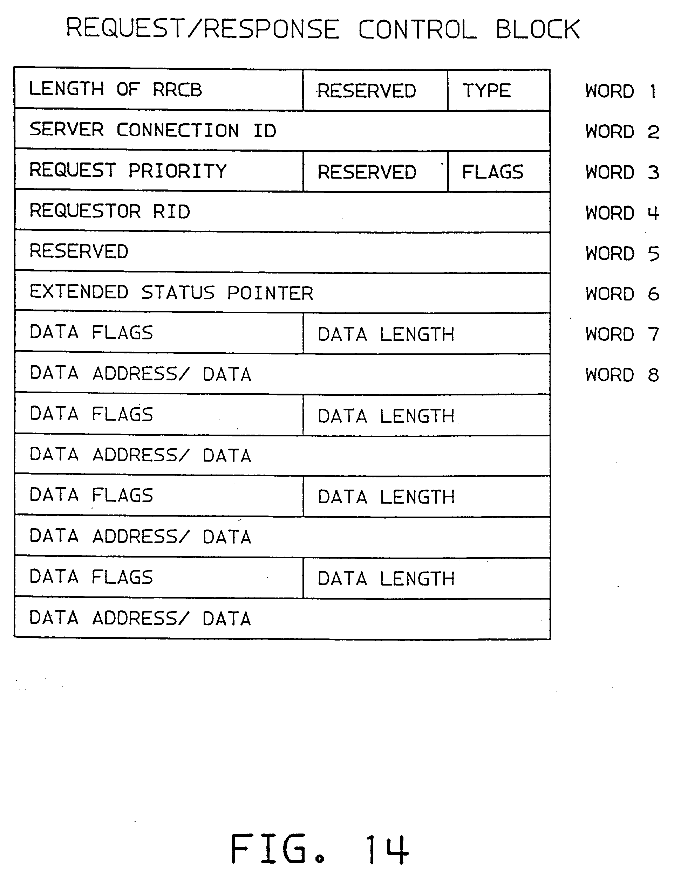

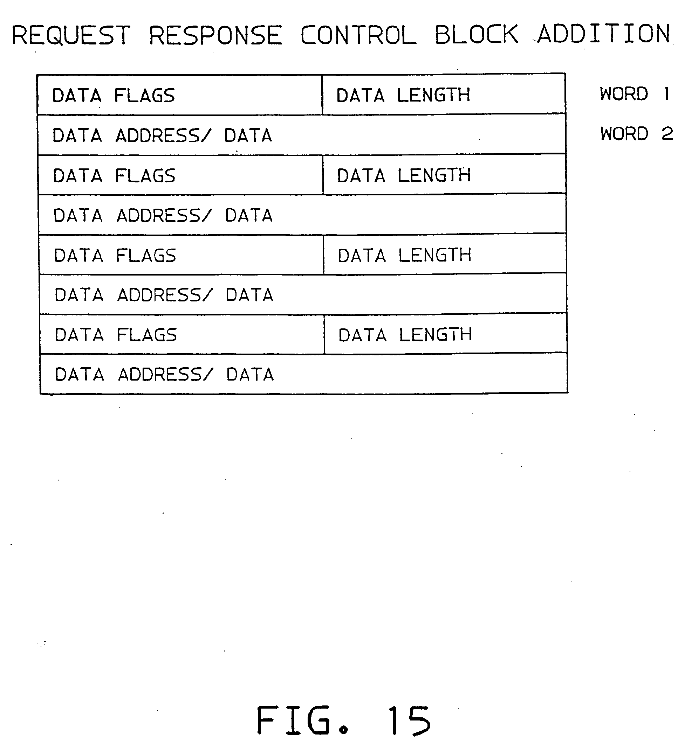

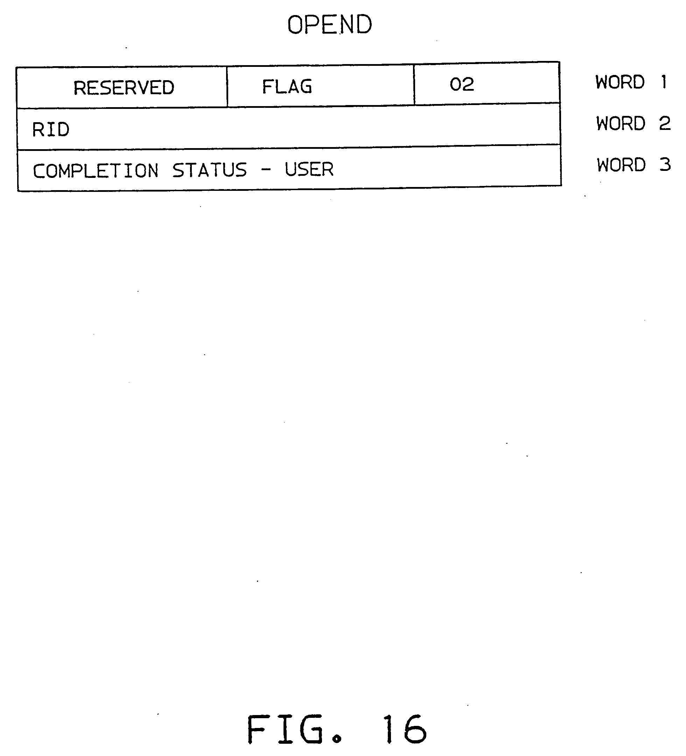

In normal flow, where it is assured that each bus unit has full DMA capability, bus manager 88 would receive information from IPCF verbs from IPCF 74, which indicates that a process desires to send a work request. Bus manager 88 would then alert bus manager 86 that it has work to do by sending an OPSTART message. The OPSTART bus message format is shown in Fig. 13, and has sufficient information for bus manager 86 in server bus unit 50 to move a Request/Response Control Block (RRCB) that specifies control information and data addresses from bus unit 52 main storage 68 into main storage 58 in bus unit 50, if it could. Further detail of the RRCB is shown in Fig. 14 and 15. Bus manager 86, could then alert the intended process in host processor 56 through IPCF 72 that there is a pending work request, which would be queued by the process. The process would then execute the request, which would require data movement between the bus units. The copy of the RRCB, that would now be in main storage 58 would be used by the bus manager 86 to control the transfer of data between the bus units. The requested operation would be signalled complete by an OPEND (see Fig. 16) message being sent to bus manager 88, which would alert the requesting process through IPCF 74.

The problem with the above scenario is that as implemented in Fig. 2, bus hardware 90 cannot directly access main store 68. Even if bus hardware 90 had master DMA capability, bus hardware 92 would have to have slave DMA capability as well. The problem is solved by using a storage list control block and several new bus messages to give management of buffers in main store 58 of host bus unit 50 to the bus manager 88 of bus unit 52. This permits the bus manager 88 in the requestor to transfer data related to the request to the buffers in main store 58 of the server, and then the server to transfer the data from the buffers into storage usable by the server process, in accordance with the normal flow of work. Thus, data flow appears normal to IPCF 72. The RRCB is used to indicate, as usual, where the data is that the server must access. The requestor bus manager 88 simply ensures that the data is located in buffers in main store 58. A more detailed description of the RRCB and messages will now be given.

A RRCB is shown in Figs. 14 and 15. It is used to identify a work request, and the data associated with it. The RRCB is a control block that is used by the bus manager in the requestor bus unit and the bus manager in the server bus unit to control the movement of data between the bus units. Information in the RRCB is used for the physical DMA process. The contents of the RRCB are preferably read only. The contents are not altered or modified by the bus manager in the server bus unit.

The RRCB can be any length up to 4088 bytes in the preferred embodiment, as specified by the requestor's bus manager. In order to facilitate fixed block buffer management by the requestor, RRCB's can be segmented and chained together. If a fixed block is for example, 512 bytes long, and a RRCB is longer, an RRCB is segmented into a first type, which contains some header information, and a plurality of second type segments shown in Fig. 15, none of the segments being longer than the fixed block. The first field of the first type of RRCB is a length of the total RRCB in bytes. The length is the sum of the lengths of all of the segments RRCB. A RRCB TYPE field specifies that it is a first type RRCB segment. A SERVER CONNECTION ID specifies the identification of the target process for this request. A REQUEST PRIORITY field specifies the priority to be used by the server processor when inserting a request note onto the server process's input queue. A FLAGS field defines whether a definite response is required by the server, or only an exception response. A REQUESTOR RID field specifies the identification of the request. It is known only to the requestor.

An EXTENDED STATUS POINTER specifies an address of an area into which extended status (status data exceeding the architected size permitted for status) may be placed. This area must preferably be available and set to zero by the requestor bus manager prior to usage. The address is for the same storage as the RRCB in the requestor managed storage.

The remainder of the first type segment is identical to type two segments. It consists of a plurality of descriptor element words which specify the type of data described by the descriptor element in the DATA FLAGS field. A descriptor type in the DATA FLAGS field identifies the descriptor type, such as Request, Data In from server storage to requestor storage, Data Out to server storage from requestor storage, or a segment link to the next RRCB segment when a further segment is required. The RRCB segment link descriptor element must appear at the end of the RRCB segment if there is another RRCB segment. A descriptor format field within the DATA FLAGS field is used for specifying that immediate data is left justified starting in the data word and continuing for a maximum of 44 bytes. A request or Data Out descriptor may be immediate data or a reference including the bus unit number and data address to identify where to DMA data to or from. A bus unit number must always appear when the reference descriptor format is specified. The DATA FLAGS field identifies the bus unit, by bus unit number, that the address in the next field refers to.

A DATA LENGTH field specifies the length of the data, in bytes, of the field specified by the following address field. It is an unsigned integer value which specifies contiguous real storage. The data is padded with zeros to a multiple of 8 bytes.

A DATA ADDRESS/DATA field is used either as an address or immediate data. This field is immediate data if immediate data is specified in the DATA FLAGS descriptor format of the previous word of the RRCB segment; otherwise it is an address. The address could be in the server's storage, the requestor's storage, or a third bus unit's storage which is not shown. The address is used by the server bus manager for DMA operations to or from the storage in the other processor, or in a requestor controlled buffer in the server storage.

## Claims

1. A communication management system for a bus unit (50,52) in a loosely coupled distributed processor network, wherein the bus units (50,52) are coupled together by a bus (54) and each bus unit comprises one or more processors (56,66), and wherein the communication management system facilitates process to process communication between processes residing on target and originating bus units, the system at a bus unit comprising:
receiving means for receiving messages to initiate work, said messages originating from an originating bus unit;
the system being characterized by
a resource manager (86,88) coupled to the receiving means, said resource manager comprising:
management means for allocating bus unit resources to predetermined connection groups (CG1-CGn) on the bus unit, whereby each connection group includes connections between processes on two unique processors and each connection group is given enough of the processor resources to provide at least a predetermined minimum functionality;
full means for returning a queue full message to the originating bus unit in response to a message to initiate work in a predetermined one of the groups if there are not adequate resources available for the group to perform the work;
resource available means for sending a resource available message to the originating bus unit when resources become available for the group; and
work accepting means for accepting a message to initiate work from the originating bus unit provided that the originating bus unit has first provided a restart message and the group has adequate resources available, whereby said restart message is sent by the originating bus unit upon receipt of a resource available message.

2. The communication management system of claim 1 characterized in that the resource manager further comprises:
means for sending a message to initiate work to a second bus unit in response to a process within the bus unit initiating a work request.

3. The communication management system of claim 2 characterized in that the resource manager further comprises:
holding means for storing previously sent messages to initiate work in a second bus unit, said stored messages indicating the second bus unit and group to which they were sent;
restart means for sending a restart message to the second bus unit which responded with a queue full message to an initiate work message from the present bus unit, said restart message being sent following receipt of a queue space available message from the second bus unit; and
resending means coupled to the restart means and the holding means for resending messages to initiate work which caused a queue full message to be sent by the second bus unit.

4. The communication management system of any one of claims 1 to 3 characterized in that the full means further comprises means for monitoring the resources still available to each group.

5. The communication management system of claim 4 characterized in that the monitoring means comprises a counter for each group which is decremented or incremented depending on whether a work request is completed by the group or is received by the group.

6. The communication management system of claim 5 characterized in that the full means returns the queue full message based on a comparison of the value of the counter with a maximum value for the group.

7. The communication management system of claim 6 characterized in that each work request causes the monitoring means to increment or decrement the counter by one.

8. The communication management system of claim 6 characterized in that each work request contains an indication of the amount of resources the request requires to be served, and wherein the monitoring means increments or decrements the counter an amount dependent on that indication.

9. The communication management system of claim 3 characterized in that the resource manager further comprises:
a sending queue for holding work requests to be sent by the bus unit;
an intermediate queue for holding work requests to be sent, in the same order that they were to be sent, but for which a queue full message has been received for the group they were intended for;
means for transferring work requests from the sending queue to the intermediate queue if a queue full message has been received for the group they were intended for; and
means for checking the holding means to determine if all work requests for groups for which a queue full message has been received, have resulted in queue full messages being received.

10. The communication management system of claim 9 characterized in that the resending means resends the work requests which received queue full messages once the means for checking indicates that all of them have received queue full message, said resending means sending them in the same order that they were originally sent, and said resending means then sending the work requests on the intermediate queue in the same order that they were originally queued in the sending queue.

## Patentansprüche

1. Kommunikationsverwaltungssystem für eine Buseinheit (50, 52) in einem lose verbundenen, verteilten Prozessornetz, wobei die Buseinheiten (50, 52) durch einen Bus (54) miteinander verbunden sind und jede Buseinheit einen oder mehr Prozessoren (56, 66) aufweist und wobei das Kommunikationsverwaltungssystem die Prozeß-zu-Prozeß-Kommunikation zwischen Prozessen, die sich auf Ziel- und Ursprungsbuseinheiten befinden, erleichtert, wobei das System bei einer Buseinheit folgendes aufweist:
ein Empfangsmittel zum Empfangen von Nachrichten, um Verarbeitungsvorgänge einzuleiten, wobei die Nachrichten von einer Ursprungsbuseinheit stammen;
wobei das System gekennzeichnet ist durch:
einen Ressourcenverwalter (86, 88), der mit dem Empfangsmittel verbunden ist, wobei der Ressourcenverwalter folgendes aufweist:
ein Verwaltungsmittel zum Zuordnen von Buseinheitenressourcen zu vorbestimmten Verbindungsgruppen (CG1 bis CGn) auf der Buseinheit, wodurch jede Verbindungsgruppe Verbindungen zwischen Prozessen auf zwei eindeutigen Prozessoren umfaßt und jede Verbindungsgruppe ausreichend Prozessorressourcen erhält, um mindestens eine vorbestimmte Minimalfunktionalität zu gewährleisten;
ein Vollmittel zum Zurücksenden einer Nachricht "Warteschlange voll" zur Ursprungsbuseinheit als Antwort auf eine Nachricht zum Einleiten von Verarbeitungsvorgängen in einer vorbestimmten der Gruppen, falls für die Gruppe keine ausreichenden Ressourcen zum Durchführen der Verarbeitungsvorgänge verfügbar sind;
ein "Ressourcen verfügbar"-Mittel zum Senden einer Nachricht "Ressourcen verfügbar" zur Ursprungsbuseinheit, wenn Ressourcen für die Gruppe verfügbar werden; und
ein Verarbeitungsvorgangannahme-Mittel zum Annehmen einer Nachricht, um Verarbeitungsvorgänge von der Ursprungsbuseinheit einzuleiten, vorausgesetzt daß die Ursprungsbuseinheit zuerst eine Nachricht "Neustart" gesendet hat und der Gruppe ausreichend Ressourcen zur Verfügung stehen, wodurch die Nachricht "Neustart" von der Ursprungsbuseinheit beim Empfang einer Nachricht "Ressourcen verfügbar" gesendet wird.

2. Kommunikationsverwaltungssystem nach Anspruch 1, dadurch gekennzeichnet, daß der Ressourcenverwalter des weiteren folgendes aufweist:
ein Mittel zum Senden einer Nachricht zum Einleiten von Verarbeitungsvorgängen zu einer zweiten Buseinheit als Antwort auf einen Prozeß innerhalb der Buseinheit, der eine Verarbeitungsanforderung einleitet.

3. Kommunikationsverwaltungssystem nach Anspruch 2, dadurch gekennzeichnet, daß der Ressourcenverwalter des weiteren folgendes aufweist:
ein Zwischenspeichermittel zum Speichern von vorher gesendeten Nachrichten zum Einleiten von Verarbeitungsvorgängen in einer zweiten Buseinheit, wobei die gespeicherten Nachrichten die zweite Buseinheit und die Gruppe, zu der sie gesendet wurden, anzeigen;
ein Neustartmittel zum Senden einer Nachricht "Neustart" zu der zweiten Buseinheit, die mit einer Nachricht "Warteschlange voll" auf eine Nachricht "Verarbeitungsvorgang einleiten" von der aktuellen Buseinheit antwortete, wobei die Nachricht "Neustart" nach dem Empfang einer Nachricht "Warteschlangenspeicher verfügbar" von der zweiten Buseinheit gesendet wird; und
ein Rücksendemittel, das mit dem Neustartmittel und dem Zwischenspeichermittel verbunden ist, um Nachrichten zum Einleiten von Verarbeitungsvorgängen zurückzusenden, die bewirkten, daß eine Nachricht "Warteschlange voll" von der zweiten Buseinheit gesendet werden muß.

4. Kommunikationsverwaltungssystem nach einem der Ansprüche 1 bis 3, dadurch gekennzeichnet, daß das Vollmittel des weiteren ein Mittel zum Überwachen der für jede Gruppe noch verfügbaren Ressourcen aufweist.

5. Kommunikationsverwaltungssystem nach Anspruch 4, dadurch gekennzeichnet, daß das Überwachungsmittel einen Zähler für jede Gruppe aufweist, der vermindert oder erhöht wird, je nachdem, ob eine Verarbeitungsanforderung von der Gruppe beendet oder von der Gruppe empfangen wird.

6. Kommunikationsverwaltungssystem nach Anspruch 5, dadurch gekennzeichnet, daß das Vollmittel die Nachricht "Warteschlange voll" in Abhängigkeit von einem Vergleich des Zählerwertes mit einem Maximalwert für die Gruppe sendet.

7. Kommunikationsverwaltungssystem nach Anspruch 6, dadurch gekennzeichnet, daß jede Verarbeitungsanforderung bewirkt, daß das Überwachungsmittel den Zähler um Eins erhöht oder vermindert.

8. Kommunikationsverwaltungssystem nach Anspruch 6, dadurch gekennzeichnet, daß jede Verarbeitungsanforderung eine Meldung über die Menge an Ressourcen, die eine Anforderung benötigt, um ausgeführt zu werden, beinhaltet und wobei das Überwachungsmittel den Zähler in Abhängigkeit von dieser Meldung um einen Betrag erhöht oder vermindert.

9. Kommunikationsverwaltungssystem nach Anspruch 3, dadurch gekennzeichnet, daß der Ressourcenverwalter des weiteren folgendes aufweist:
eine Sendewarteschlange zum Zwischenspeichern von Verarbeitungsanforderungen, die von der Buseinheit gesendet werden müssen;
eine Zwischenwarteschlange zum Zwischenspeichern von zu sendenden Verarbeitungsanforderungen in derselben Reihenfolge, in der sie gesendet werden mußten, für die jedoch eine Nachricht "Warteschlange voll" für die Gruppe, für die sie bestimmt waren, empfangen wurde;
ein Mittel zum Übertragen von Verarbeitungsanforderungen von der Sendewarteschlange zu der Zwischenwarteschlange, falls eine Nachricht "Warteschlange voll" für die Gruppe, für die sie bestimmt waren, empfangen wurde; und
ein Mittel zum Überprüfen des Zwischenspeichermittels, um zu bestimmen, ob alle Verarbeitungsanforderungen für Gruppen, für die eine Nachricht "Warteschlange voll" empfangen wurde, zu Nachrichten "Warteschlange voll" geführt haben, die empfangen werden.

10. Kommunikationsverwaltungssystem nach Anspruch 9, dadurch gekennzeichnet, daß das Rücksendemittel die Verarbeitungsanforderungen, die Nachrichten "Warteschlange voll" empfangen haben, zurücksendet, sobald das Mittel zum Überprüfen anzeigt, daß alle von ihnen eine Nachricht "Warteschlange voll" empfangen haben, wobei das Rücksendemittel diese in derselben Reihenfolge sendet, in der sie ursprünglich gesendet wurden, und wobei das Rücksendemittel anschließend die Verarbeitungsanforderungen in derselben Reihenfolge, wie sie ursprünglich in die Sendewarteschlange gestellt wurden, in die Zwischenwarteschlange sendet.

## Revendications

1. Système de gestion de communications pour unité de bus dans un réseau de processeurs distribué à couplage lâche, dans lequel les unités de bus (50, 52) sont couplées ensemble par un bus (54) et chaque unité de bus comprend un ou plusieurs processeurs (56, 66), et dans lequel le système de gestion de communications facilite la communication de processus à processus entre des processus résidant sur des unités de bus cible et émetteur, le système à l'unité de bus comprenant:
des moyens de réception pour recevoir des messages d'amorce de travail, lesdits messages provenant d'une unité de bus émetteur;
le système étant caractérisé par
un gestionnaire de ressources (86, 88) couplé aux moyens de réception, ledit gestionnaire de ressources comprenant:
des moyens de gestion pour attribuer des ressources d'unité de bus à des groupes de connexions prédéterminés (CG1-CGn) sur l'unité de bus, ce qui fait que chaque groupe de connexions comporte des connexions entre processus sur deux processeurs uniques et chaque groupe de connexions reçoit suffisamment de ressources de processeur pour assurer au moins une fonctionnalité minimale prédéterminée;
des moyens de file d'attente pleine pour retourner un message de file d'attente pleine à l'unité de bus émetteur en réponse à un message d'amorce de travail dans un groupe prédéterminé des groupes s'il n'y a pas de ressources adéquates disponibles pour que le groupe accomplisse le travail;
des moyens de ressources disponibles pour envoyer un message de ressources disponibles à l'unité de bus émetteur lorsque des ressources deviennent disponibles pour le groupe; et
des moyens d'acceptation de travail pour accepter un message d'amorce de travail provenant de l'unité de bus émetteur pourvu que l'unité de bus émetteur ait tout d'abord fourni un message de reprise et que le groupe ait des ressources adéquates disponibles, ce qui fait que ledit message de reprise est envoyé par l'unité de bus émetteur à la réception d'un message de ressources disponibles.

2. Système de gestion de communications selon la revendication 1, caractérisé en ce que le gestionnaire de ressources comprend en outre:
des moyens pour envoyer un message d'amorce de travail à une deuxième unité de bus en réponse à un processus dans l'unité de bus amorçant une requête de travail.

3. Système de gestion de communications selon la revendication 2, caractérisé en ce que le gestionnaire de ressources comprend en outre:
des moyens de stockage pour emmagasiner des messages d'amorce de travail envoyés préalablement dans une deuxième unité de bus, lesdits messages emmagasinés indiquant la deuxième unité de bus et le groupe sur lesquels ils ont été envoyés;
des moyens de reprise pour envoyer un message de reprise à la deuxième unité de bus qui a répondu par un message de file d'attente pleine à un message d'amorce de travail provenant de la présente unité de bus, ledit message de reprise étant envoyé après la réception d'un message d'espace de file d'attente disponible provenant de la deuxième unité de bus; et
des moyens de renvoi couplés aux moyens de reprise et aux moyens de stockage pour renvoyer des messages d'amorce de travail qui ont permis à un message de file d'attente pleine d'être envoyé par la deuxième unité de bus.

4. Système de gestion de communications selon l'une quelconque des revendications 1 à 3, caractérisé en ce que les moyens de file d'attente pleine comprennent en outre des moyens pour superviser les ressources encore disponibles pour chaque groupe.

5. Système de gestion de communications selon la revendication 4, caractérisé en ce que les moyens de supervision comprennent un compteur par groupe qui est décrémenté ou incrémenté suivant qu'une requête de travail est accomplie par le groupe ou qu'elle est reçue par le groupe.

6. Système de gestion de communications selon la revendication 5, caractérisé en ce que les moyens de file d'attente pleine retournent le message de file d'attente pleine basé sur une comparaison de la valeur du compteur et d'une valeur maximale pour le groupe.

7. Système de gestion de communications selon la revendication 6, caractérisé en ce que chaque requête de travail permet aux moyens de supervision d'incrémenter ou de décrémenter le compteur de "un".

8. Système de gestion de communications selon la revendication 6, caractérisé en ce que chaque requête de travail contient une indication sur la quantité de ressources à servir suivant la requête faite, et dans lequel les moyens de supervision incrémentent ou décrémentent le compteur d'une quantité qui dépend de cette indication.

9. Système de gestion de communications selon la revendication 3, caractérisé en ce que le gestionnaire de ressources comprend en outre:
une file d'attente d'envoi pour stocker des requêtes de travail à envoyer par l'unité de bus;
une file d'attente intermédiaire pour stocker des requêtes de travail à envoyer dans le même ordre que celui dans lequel elles devaient être envoyées, mais pour lesquelles un message de file d'attente pleine a été reçu pour le groupe auquel elles étaient destinées;
des moyens pour transférer des requêtes de travail depuis la file d'attente d'envoi jusqu'à la file d'attente intermédiaire si un message de file d'attente pleine a été reçu pour le groupe auquel elles étaient destinées; et
des moyens de vérification pour vérifier les moyens de stockage afin de déterminer si toutes les requêtes de travail pour des groupes pour lesquels a été reçu un message de file d'attente pleine, ont eu comme résultat la réception de messages de file d'attente pleine.

10. Système de gestion de communications selon la revendication 9, caractérisé en ce que les moyens de renvoi renvoient les requêtes de travail qui ont reçu des messages de file d'attente pleine lorsque les moyens de vérification indiquent qu'elles ont toutes reçu un message de file d'attente pleine, lesdits moyens de renvoi les envoyant dans le même ordre que celui dans lequel elles ont été envoyées à l'origine, et lesdits moyens de renvoi envoyant alors les requêtes de travail sur la file d'attente intermédiaire dans le même ordre que celui dans lequel elles ont été mises en file d'attente à l'origine dans la file d'envoi.
